# EUROPEAN PATENT APPLICATION

(11) **EP 4 389 863 A1**
(43) Date of publication of application: **26.06.2024**
(21) Application number: 22214983.3
(22) Date of filing: 20.12.2022
(51) Int. Cl.: C11D 3/20, C11D 3/33, C11D 3/36, C11D 3/37, C11D 11/02, B01D 1/18, B01J 2/04, B01J 2/16

(54) **PROCESS FOR MAKING A POWDER OR GRANULE**

(71) Applicant: BASF SE, 67056 Ludwigshafen am Rhein (DE)
(72) Inventor: Arndt, Matthias, 67056 Ludwigshafen am Rhein (DE); Hartmann, Markus, 67056 Ludwigshafen am Rhein (DE); Schmidt, Astrid, 67056 Ludwigshafen am Rhein (DE); Mueller, Michael Klemens, 67056 Ludwigshafen am Rhein (DE); Jaekel, Frank, 67056 Ludwigshafen am Rhein (DE); Reinoso Garcia, Marta, 67056 Ludwigshafen am Rhein (DE)
(74) Representative: BASF IP Association

(57) **Abstract**

The present invention deals with a process for making a powder or granule.

## Description

The present invention deals with a process for making a powder or granule.

Granules and powders have the advantage of being essentially water-free. That means that in case of shipping, no water has to be shipped, and costs for extra weight can be avoided.

To name one example, powders or granules containing typical ingredients of washing or cleaning formulations, e. g. for laundry formulations or dishwashing formulations, are desired by industrial users making and marketing such formulations.

Typical ingredients of washing or cleaning formulations may include builders, surfactants, polymers, inorganic compounds, anionic surfactants, cationic surfactants, non-ionic surfactants and/or chelating agents.

For example, many industrial users prefer to use chelating agents in the form of granules or powders which may contain, in addition to the at least one chelating agent, at least one additional compound, in particular polymers. Some customers also wish to incorporate higher amounts of additional compounds, e. g. polymers, into the granules or powders containing at least one chelating agent.

Methods for providing granules or powders of chelating agents, also in combination with other compounds like polymers, have been described in the art, for example in WO 2015/121170 A1. In general, powders or granules containing one or more compounds may be obtained, for example, by spray-drying or spray-granulation.

However, classical spray-drying or spray-granulation may have limitations when applied to certain sensible compounds or compounds with incompatibilities with each other. For example, some polymers, like polyaspartic acid, are pH sensitive, and are therefore difficult to use in a classical spray-drying or spray-granulation process together with certain other compounds, for example chelating agents like methylglycine diacetic acid (MGDA).

Furthermore, there is a general need in the art to provide simplified, more economical and/or more environmentally friendly (spray-drying or spray-granulation) processes.

For example, it has proven difficult to incorporate higher amounts of certain polymers into a granule or powder containing MGDA. Thus, a two-step process was developed (described, inter alia, in unpublished patent application no. 22174569.8), wherein MGDA is first sprayed or granulated together with a certain, relatively low amount of polymer, and in a second step, the remaining amount of polymer is physically admixed.

It would be desirable to avoid the need for a two-stage process, and provide a one-stage only process which is able to deliver a powder or granule containing MGDA and higher amounts of polymer.

Furthermore, it would be advantageous to provide a (spray-drying or spray-granulation) process which may be performed continuously, as opposed to the usual batch processes.

Thus, it was an objective of the present invention to provide a (spray-drying or spray-granulation) process which overcomes the disadvantages and problems mentioned above. In particular, it was an objective of the present invention to provide a (spray-drying or spray-granulation) process which is simple and economical, and/or which is able to deal with sensitive compounds and/or compounds with incompatibilities with each other.

The inventors have now surprisingly found that a process as described in the appended claims is able to solve technical problems mentioned above.

Thus, one subject of the present invention is a process for making a powder (P) or granule (G) which is performed in a multizone or multinozzle drying apparatus (A) comprising 2 to n zones (Z) and/or 2 to i nozzles (N), comprising
(i) Spraying in a first zone (Z1) and/or nozzle (N1) a solution or slurry of a single compound or a mixture of compounds, and
(ii) Spraying in each of the following zones (Zn) and/or nozzles (Ni), the same or different solution or slurry of a single compound or a mixture of compounds,
wherein in at least one zone (Zx) or nozzle (Ny) the solution or slurry of a single compound or a mixture of compounds is different from the solution or slurry of a single compound or a mixture of compounds of the first zone (Z1) and/or nozzle (N1).

Preferably, the solution or slurry is aqueous.

In one embodiment, the inventive process is operated continuously.

Preferably, the inventive process is performed in a multizone or multichamber fluidized bed spray granulation apparatus. Typical residence times are between 2 minutes and 4 hours, preferably from 30 minutes to 2 hours.

The pressure in such apparatuses is 850 mbar abs to 1200 mbar abs, preferably normal pressure ± 20 mbar, for example one mbar less than normal pressure.

Bed temperatures are strongly depended from the product. Typical bed temperatures lay in a range from 40°C to 150°C. Most times, the inlet air temperature is 20 to 150°C higher than the bed temperature. In one embodiment, the inlet is more than 150°C higher than the bed temperatures.

Suitable nozzles are, for example, high-pressure rotary drum atomizers, rotary atomizers, three-fluid nozzles, single-fluid nozzles, single fluid high-pressure nozzles or two-fluid nozzles. Single-fluid nozzles and two-fluid nozzles being preferred. If a two fluid nozzle is used, than the first fluid is the aqueous slurry or aqueous solution, respectively, the second fluid is compressed gas, for example with a pressure of 1.1 to 7 bar, abs.

In one preferred embodiment of this invention, a sieving and milling step is used to adjust the particle size distribution, comprising the following steps:
(a) withdrawing powder or granules, respectively, from the spray-dryer or spray-granulator
(b) separating off fines from said powder or granules
(c) separating off oversized particles (lumps) from said powder or granules
(d) milling said lumps
(e) re-introducing said fines from step (b) and milled lumps from step (d) into the spray-dryer or spray-granulator
(f) powder or granules that have particle sizes larger than fines, but smaller than lumps are the targeted inventive granules.

A typical size for fines is (but not limited to) smaller than 0,3mm. A typical size for oversized particles is (but not limited to) larger than 1,4mm. The particle sizes of the fines and oversized particles are depended from the targeted product particle range.

In a preferred embodiment, the fines from step (b) and milled lumps from step (d) are introduced into zone 1.

In the inventive process, spraying may be done through separate spraying nozzles (N) of the spray granulation or spray drying apparatus, and/or spraying may be done in separate spraying chambers of the spray granulation or spray drying apparatus.

In an embodiment of the inventive process, the nozzles (N) have a distance of at least 10 cm, preferably at least 30 cm from each other, more preferably at least 50 cm or at least 70 cm.

The inventive process may be used to produce a powder (P) or granule (G) containing a mixture of typical ingredients of washing or cleaning formulations.

In the context of the present invention, typical ingredients of washing or cleaning formulations may be selected from the list consisting of builders, surfactants, polymers, inorganic compounds. Typical ingredients of washing or cleaning formulations may also be selected from the list consisting of anionic surfactants, cationic surfactants and non-ionic surfactants. Typical ingredients of washing or cleaning formulations may also be selected from the list consisting of homo- and copolymers of (meth)acrylic acid, biobased and/or biodegradable polymers.

In one embodiment of the inventive process, typical ingredients of washing or cleaning formulations may be selected from the list consisting of (i) chelating agents, preferably selected from methyl glycine diacetic acid (MGDA), glutamic acid diacetate (GLDA), iminodisuccinic acid (IDS), ethylediamine disuccinic acid (EDDS), citrate, phosphonates, their respective alkali metal salts and their mixtures, (ii) polymers, (iii) surfactants, (iv) enzymes and (v) inorganic compounds.

In one embodiment of the inventive process, the mixture of compounds (M) contains at least one compound (C) selected from the list consisting of (i) chelating agents, preferably selected from methyl glycine diacetic acid (MGDA), glutamic acid diacetate (GLDA), iminodisuccinic acid (IDS), ethylediamine disuccinic acid (EDDS), citrate, phosphonates, their respective alkali metal salts and their mixtures, (ii) polymers and (iii) surfactants, e. g. non-ionic surfactants, anionic surfactants and/or cationic surfactants.

In another embodiment of the inventive process, compound (C) is selected from methyl glycine diacetic acid (MGDA) and its respective alkali metal salts, preferably sodium salts.

In one embodiment, typical ingredients of washing or cleaning formulations or compound (C) may be selected from the list consisting of polymers (including biobased polymers), inorganic compounds, surfactants, silicates, preferably from the list consisting of sulfo-polymers, surfactants and inorganic compounds.

Polymer may be selected from copolymers of (meth)acrylic acid and a comonomer bearing at least one sulfonic group per molecule, preferably 2-acrylamido-2- methylpropane sulfonic acid (AMPS), or polyaspartic acid.

For example, polymer may be selected from bio-based and/or biodegradable polymers, for example polyaspartic acid or polyepoxysuccinic acid.

In one embodiment, polymer may comprise one or more compounds selected from the group of alkoxylated polyalkylene imine or alkoxylated polyamines, which may be called "CP8" herein. "CP8" also includes the structures disclosed in WO 2021/165468, in particular in claim 1 and on pages 2 to 4 of WO 2021/165468 and the structures obtained by processes described in WO 2022/136408 and in WO 2022/136409, in particular in claim 1 and on page 3 of WO 2022/136408 and WO 2022/136409, respectively. The structures of the alkoxylated polyalkylene imine or alkoxylated polyamine may be further described by the general formula (CP8a) 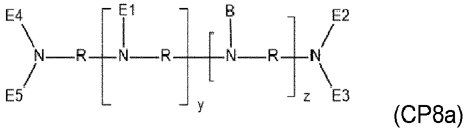 in which the variables are each defined as follows:
- R: represents identical or different,
i) linear or branched C₂-C₁₂₋alkylene radicals or
ii) an etheralkyl unit of the following formula (CP8b): 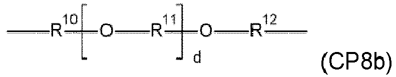 in which the variables are each defined as follows:
R¹⁰, R¹¹, R¹² represent identical or different, linear or branched C₂-C₆-alkylene radicals and
d is an integer having a value in the range of 0 to 50 or
iii) C₅-C₁₀-cycloalkylene radicals optionally substituted with at least one C₁-C₃-alkyl;
- B: represents a continuation of the alkoxylated polyalkylene imine by branching
- y and z: are each an integer having a value in the range of 0 to 150, under the proviso that both z and y are 0 in case R are C₅-C₁₀-cycloalkylene radicals optionally substituted with at least one C₁-C₃-alkyl
- E1, E2, E3, E4, E5: hydrogen or represent an identical or different residue according to formula (CP8c),

wherein the residue according to formula (CP8c) is an alkylenoxy unit defined as follows 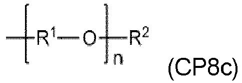
in which the variables are each defined as follows:
   - R¹: represents C₂-C₂₂-(1,2-alkylene) radicals;
   - R²: represents hydrogen and/or C₁-C₂₂-alkyl and/or C₇-C₂₂-aralkyl in case z is an integer ≥ 1 within general formula (CP8b), or
   - R²: represents hydrogen and/or C₁-C₄-alkyl and/or C₇-C₂₂-aralkyl in case z is 0 within general formula (CP8b);
   - n: is an integer having a value of at least 5 to 100;
wherein 20 to 100% of the total amount of E1, E2, E3, E4 and E5 in general formula (CP8a) is a residue according to formula (CP8c).

In one embodiment, the nitrogen atoms present in CP8 are quaternized, in order to adjust the alkoxylated polyalkylene imines or the alkoxylated polyamines to the particular formulation to achieve better compatibility and/or phase stability of the formulation

A further subject of the present invention is also a powder (P) or granule (G), obtained or obtainable according to the inventive process.

Another subject of the present invention is the use of a powder (P) or granule (G), obtained or obtainable according to the inventive process, in laundry or dishwashing applications, preferably dishwashing applications, more preferably, automatic dishwashing applications, or in industrial and institutional cleaning applications.

As one example of a powder (P) or granule (G), obtained or obtainable according to the inventive process, solid alkali metal salts (A) of an aminocarboxylate complexing agent are mentioned herein.

These inventive powders or granules containing, for example, MGDA, exhibit overall advantageous properties including but not limited to an excellent yellowing behavior, especially in the presence of bleaching agents. They are therefore excellently suitable for the manufacture of cleaning agents that contain at least one bleaching agent, such cleaning agent hereinafter also being referred to as bleach. In particular inventive solid compositions are suitable for the manufacture cleaning agent for fibers or hard surfaces wherein said cleaning agent contains at least one peroxy compound.

Inventive solid compositions (e. g. powders) may easily be converted into compactates and into agglomerates.

Another aspect of the present invention is therefore the use of powder or granule containing a solid alkali metal salt (A) of an aminocarboxylate complexing agent for the manufacture of a cleaning agent that contains at least one bleaching agent, and in particular for the manufacture of cleaning agent for fibers or hard surfaces, wherein said cleaning agent contains at least one peroxy compound. Another aspect of the present invention is a process for making at a cleaning agent by combining at least one inventive solid alkali metal salt (A) of an aminocarboxylate complexing agent with at least one bleaching agent, preferably at least one peroxy compound. Another aspect of the present invention is a cleaning agent, hereinafter also being referred to as inventive cleaning agent. Inventive cleaning agents contain at least one bleaching agent and at least one inventive solid alkali metal salt (A) of an aminocarboxylate complexing agent (e. g. powder). Inventive cleaning agents show a reduced tendency for yellowing and therefore have an extended shelve-life.

Examples of suitable peroxy compounds are sodium perborate, anhydrous or for example as monohydrate or as tetrahydrate or so-called dihydrate, sodium percarbonate, anhydrous or, for example, as monohydrate, hydrogen peroxide, persulfates, organic peracids such as peroxylauric acid, peroxystearic acid, peroxy-α-naphthoic acid, 1,12-diperoxydodecanedioic acid, perbenzoic acid, peroxylauric acid, 1,9-diperoxyazelaic acid, diperoxyisophthalic acid, in each case as free acid or as alkali metal salt, in particular as sodium salt, also sulfonylperoxy acids and cationic peroxy acids.

In a preferred embodiment, peroxy compound is selected from inorganic percarbonates, persulfates and perborates. Examples of sodium percarbonates are 2 Na₂CO₃·3 H₂O₂. Examples of sodium perborate are (Na₂[B(OH)₂(O₂)]₂), sometimes written as NaBO₂·O₂·3H₂O instead. Most preferred peroxy compound is sodium percarbonate

The term "cleaning agents" includes compositions for dishwashing, especially hand dishwash and automatic dishwashing and ware-washing, and compositions for hard surface cleaning such as, but not limited to compositions for bathroom cleaning, kitchen cleaning, floor cleaning, descaling of pipes, window cleaning, car cleaning including truck cleaning, furthermore, open plant cleaning, cleaning-in-place, metal cleaning, disinfectant cleaning, farm cleaning, high pressure cleaning, and in addition, laundry detergent compositions.

Such cleaning agents may be liquids, gels or preferably solids at ambient temperature, solids cleaning agents being preferred. They may be in the form of a powder or in the form of a unit dose, for example as a tablet or pouch.

In one embodiment of the present invention, inventive cleaning agents may contain

in the range of from 2 to 50 % by weight of inventive solid alkali metal salt (A) of an aminocarboxylate complexing agent and

in the range of from 0.5 to 15 % by weight of bleach.

Percentages are based on the solids content of the respective inventive cleaning agent.

Inventive solid alkali metal salts (A) of an aminocarboxylate complexing agent are excellently suited for the manufacture of laundry detergents or cleaners.

Inventive cleaning agents may contain further ingredients such as one or more surfactants that may be selected from non-ionic, zwitterionic, cationic, and anionic surfactants. Other ingredients that may be contained in inventive cleaning agents may be selected from bleach activators, bleach catalysts, corrosion inhibitors, sequestering agents other than chelating agent (A), enzymes, fragrances, dyestuffs, antifoams, and builders.

Particularly advantageous inventive cleaning agents may contain one or more complexing agents other than MGDA or GLDA. Advantageous detergent compositions for cleaners and advantageous laundry detergent compositions may contain one or more sequestrant (chelating agent) other than a mixture according to the present invention. Examples for sequestrants other than a mixture according to the present invention are IDS (iminodisuccinate), citrate, phosphonic acid derivatives, for example the disodium salt of hydroxyethane-1,1-diphosphonic acid ("HEDP"), and polymers with complexing groups like, for example, polyethyleneimine in which 20 to 90 mole-% of the N-atoms bear at least one CH₂COO⁻ group, and their respective alkali metal salts, especially their sodium salts, for example IDS-Na₄, and trisodium citrate, and phosphates such as STPP (sodium tripolyphosphate). Due to the fact that phosphates raise environmental concerns, it is preferred that advantageous inventive cleaning agents are free from phosphate. "Free from phosphate" should be understood in the context of the present invention, as meaning that the content of phosphate and polyphosphate is in sum in the range from 10 ppm to 0.2% by weight, determined by gravimetric methods and referring to the respective inventive cleaning agent.

Inventive cleaning agents may contain one or more surfactant, preferably one or more non-ionic surfactant.

Preferred non-ionic surfactants are alkoxylated alcohols, di- and multiblock copolymers of ethylene oxide and propylene oxide and reaction products of sorbitan with ethylene oxide or propylene oxide, alkyl polyglycosides (APG), hydroxyalkyl mixed ethers and amine oxides.

Preferred examples of alkoxylated alcohols and alkoxylated fatty alcohols are, for example, compounds of the general formula (II) 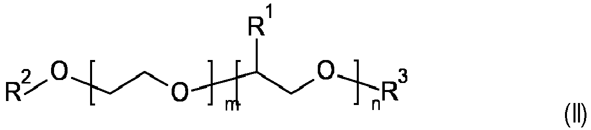 in which the variables are defined as follows:
- R¹: is identical or different and selected from hydrogen and linear C₁-C₁₀-alkyl, preferably in each case identical and ethyl and particularly preferably hydrogen or methyl,
- R²: is selected from C₈-C₂₂-alkyl, branched or linear, for example n-C₈H₁₇, n-C₁₀H₂₁, n-C₁₂H₂₅, n-C₁₄H₂₉, n-C₁₆H₃₃ or n-C₁₈H₃₇,
- R³: is selected from C₁-C₁₀-alkyl, methyl, ethyl, n-propyl, isopropyl, n-butyl, isobutyl, sec-butyl, tert-butyl, n-pentyl, isopentyl, sec-pentyl, neopentyl, 1,2-dimethylpropyl, isoamyl, n-hexyl, isohexyl, sec-hexyl, n-heptyl, n-octyl, 2-ethylhexyl, n-nonyl, n-decyl or isodecyl,
m and n are in the range from zero to 300, where the sum of n and m is at least one, preferably in the range of from 3 to 50. Preferably, m is in the range from 1 to 100 and n is in the range from 0 to 30.

In one embodiment, compounds of the general formula (II) may be block copolymers or random copolymers, preference being given to block copolymers.

Other preferred examples of alkoxylated alcohols are, for example, compounds of the general formula (III) 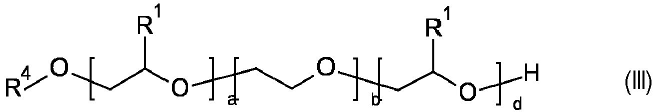 in which the variables are defined as follows:
- R¹: is identical or different and selected from hydrogen and linear C₁-C₀-alkyl, preferably identical in each case and ethyl and particularly preferably hydrogen or methyl,
- R⁴: is selected from C₆-C₂₀-alkyl, branched or linear, in particular n-C₈H₁₇, n-C₁₀H₂₁, n-C₁₂H₂₅, n-C₁₄H₂₉, n-C₁₆H₃₃, n-C₁₈H₃₇,
- a: is a number in the range from zero to 10, preferably from 1 to 6,
- b: is a number in the range from 1 to 80, preferably from 4 to 20,
- d: is a number in the range from zero to 50, preferably 4 to 25.

The sum a + b + d is preferably in the range of from 5 to 100, even more preferably in the range of from 9 to 50.

Preferred examples for hydroxyalkyl mixed ethers are compounds of the general formula (IV) 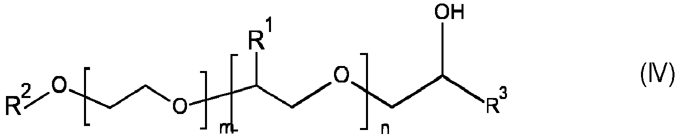 in which the variables are defined as follows:
- R¹: is identical or different and selected from hydrogen and linear C₁-C₁₀-alkyl, preferably in each case identical and ethyl and particularly preferably hydrogen or methyl,
- R²: is selected from C₈-C₂₂-alkyl, branched or linear, for example iso-C₁₁H₂₃, iso-C₁₃H₂₇, n-C₈H₁₇, n-C₁₀H₂₁, n-C₁₂H₂₅, n-C₁₄H₂₉, n-C₁₆H₃₃ or n-C₁₈H₃₇,
- R³: is selected from C₁-C₁₈-alkyl, methyl, ethyl, n-propyl, isopropyl, n-butyl, isobutyl, sec-butyl, tert-butyl, n-pentyl, isopentyl, sec-pentyl, neopentyl, 1,2-dimethylpropyl, isoamyl, n-hexyl, isohexyl, sec-hexyl, n-heptyl, n-octyl, 2-ethylhexyl, n-nonyl, n-decyl, isodecyl, n-dodecyl, n-tetradecyl, n-hexadecyl, and n-octadecyl.

The variables m and n are in the range from zero to 300, where the sum of n and m is at least one, preferably in the range of from 5 to 50. Preferably, m is in the range from 1 to 100 and n is in the range from 0 to 30.

Compounds of the general formula (II) and (III) may be block copolymers or random copolymers, preference being given to block copolymers.

Further suitable nonionic surfactants are selected from di- and multiblock copolymers, composed of ethylene oxide and propylene oxide. Further suitable nonionic surfactants are selected from ethoxylated or propoxylated sorbitan esters. Amine oxides or alkyl polyglycosides, especially linear C₄-C₁₆-alkyl polyglucosides and branched C₈-C₁₄-alkyl polyglycosides such as compounds of general average formula (V) are likewise suitable. 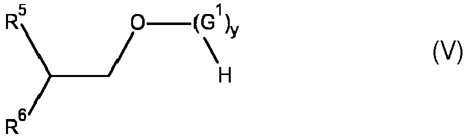 wherein the variables are defined as follows:
- R⁵: is C₁-C₄-alkyl, in particular ethyl, n-propyl or isopropyl,
- R⁶: is -(CH₂)₂-R⁵,
- G¹: is selected from monosaccharides with 4 to 6 carbon atoms, especially from glucose and xylose,
- y: in the range of from 1.1 to 4, y being an average number.

Further examples of non-ionic surfactants are compounds of general formula (VII) and (VIII) 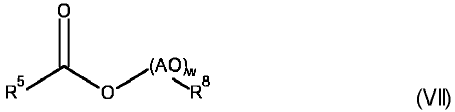 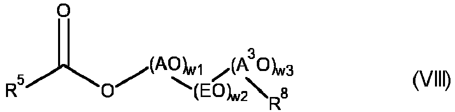
AO is selected from ethylene oxide, propylene oxide and butylene oxide,
EO is ethylene oxide, CH₂CH₂-O,
R⁸ selected from C₈-C₁₈-alkyl, branched or linear, and R⁵ is defined as above.
A³O is selected from propylene oxide and butylene oxide,
w is a number in the range of from 15 to 70, preferably 30 to 50,
w1 and w3 are numbers in the range of from 1 to 5, and
w2 is a number in the range of from 13 to 35.

An overview of suitable further nonionic surfactants can be found in EP-A 0 851 023 and in DE-A 198 19 187.

Mixtures of two or more different nonionic surfactants may also be present.

Other surfactants that may be present are selected from amphoteric (zwitterionic) surfactants and anionic surfactants and mixtures thereof.

Examples of amphoteric surfactants are those that bear a positive and a negative charge in the same molecule under use conditions. Preferred examples of amphoteric surfactants are so-called betaine-surfactants. Many examples of betaine-surfactants bear one quaternized nitrogen atom and one carboxylic acid group per molecule. A particularly preferred example of amphoteric surfactants is cocamidopropyl betaine (lauramidopropyl betaine).

Examples of amine oxide surfactants are compounds of the general formula (IX)

R⁷R⁸R⁹N→O (IX)

wherein R⁷, R⁸ and R⁹ are selected independently from each other from aliphatic, cycloaliphatic or C₂-C₄-alkylene C₁₀-C₂₀-alkylamido moieties. Preferably, R⁷ is selected from C₈-C₂₀-alkyl or C₂-C₄-alkylene C₁₀-C₂₀-alkylamido and R⁸ and R⁹ are both methyl.

A particularly preferred example is lauryl dimethyl aminoxide, sometimes also called lauramine oxide. A further particularly preferred example is cocamidylpropyl dimethylaminoxide, sometimes also called cocamidopropylamine oxide.

Examples of suitable anionic surfactants are alkali metal and ammonium salts of C₈-C₁₈-alkyl sulfates, of C₈-C₁₈-fatty alcohol polyether sulfates, of sulfuric acid half-esters of ethoxylated C₄-C₁₂-alkylphenols (ethoxylation: 1 to 50 mol of ethylene oxide/mol), C₁₂-C₁₈ sulfo fatty acid alkyl esters, for example of C₁₂-C₁₈ sulfo fatty acid methyl esters, furthermore of C₁₂-C₁₈-alkylsulfonic acids and of C₁₀-C₁₈-alkylarylsulfonic acids. Preference is given to the alkali metal salts of the aforementioned compounds, particularly preferably the sodium salts.

Further examples for suitable anionic surfactants are soaps, for example the sodium or potassium salts of stearoic acid, oleic acid, palmitic acid, ether carboxylates, and alkylether phosphates.

Preferably, laundry detergent compositions contain at least one anionic surfactant.

In one embodiment of the present invention, inventive cleaning agents that are determined to be used as laundry detergent compositions may contain 0.1 to 60 % by weight of at least one surfactant, selected from anionic surfactants, amphoteric surfactants and amine oxide surfactants.

In one embodiment of the present invention, inventive cleaning agents that are determined to be used for hard surface cleaning may contain 0.1 to 60 % by weight of at least one surfactant, selected from anionic surfactants, amphoteric surfactants and amine oxide surfactants.

In a preferred embodiment, inventive cleaning agents do not contain any anionic detergent.

Inventive cleaning agents may comprise one or more bleach catalysts. Bleach catalysts can be selected from bleach-boosting transition metal salts or transition metal complexes such as, for example, manganese-, iron-, cobalt-, ruthenium- or molybdenum-salen complexes or carbonyl complexes. Manganese, iron, cobalt, ruthenium, molybdenum, titanium, vanadium and copper complexes with nitrogen-containing tripod ligands and also cobalt-, iron-, copper- and ruthenium-amine complexes can also be used as bleach catalysts.

Inventive cleaning agents may comprise one or more bleach activators, for example N-methylmorpholinium-acetonitrile salts ("MMA salts"), trimethylammonium acetonitrile salts, N-acylimides such as, for example, N-nonanoylsuccinimide, 1,5-diacetyl-2,2-dioxohexahydro-1,3,5-triazine ("DADHT") or nitrile quats (trimethylammonium acetonitrile salts).

Further examples of suitable bleach activators are tetraacetylethylenediamine (TAED) and tetraacetylhexylenediamine.

Inventive cleaning agents may comprise one or more corrosion inhibitors. In the present case, this is to be understood as including those compounds which inhibit the corrosion of metal. Examples of suitable corrosion inhibitors are triazoles, in particular benzotriazoles, bisbenzotriazoles, aminotriazoles, alkylaminotriazoles, also phenol derivatives such as, for example, hydroquinone, pyrocatechol, hydroxyhydroquinone, gallic acid, phloroglucinol or pyrogallol.

In one embodiment of the present invention, inventive cleaning agents comprise in total in the range from 0.1 to 1.5% by weight of corrosion inhibitor.

Inventive cleaning agents may comprise one or more builders, selected from organic and inorganic builders. Examples of suitable inorganic builders are sodium sulfate or sodium carbonate or silicates, in particular sodium disilicate and sodium metasilicate, zeolites, sheet silicates, in particular those of the formula α-Na₂Si₂O₅, β-Na₂Si₂O₅, and δ-Na₂Si₂O₅, also fatty acid sulfonates, α-hydroxypropionic acid, alkali metal malonates, fatty acid sulfonates, alkyl and alkenyl disuccinates, tartaric acid diacetate, tartaric acid monoacetate, oxidized starch, and polymeric builders, for example polycarboxylates and polyaspartic acid.

Examples of organic builders are especially polymers and copolymers other such as (co)polymers (B) and include polymers and copolymers than (co)polymer (B), or one additional (co)polymer (B). In one embodiment of the present invention, organic builders are selected from polycarboxylates, for example alkali metal salts of (meth)acrylic acid homopolymers or (meth)acrylic acid copolymers, partially or completely neutralized with alkali.

Suitable comonomers for (meth)acrylic acid are monoethylenically unsaturated dicarboxylic acids such as maleic acid, fumaric acid, maleic anhydride, itaconic acid and citraconic acid. A suitable polymer is in particular polyacrylic acid, which preferably has an average molecular weight M_{w} in the range from 2000 to 40 000 g/mol, preferably 2000 to 10 000 g/mol, in particular 3000 to 8000 g/mol. Also of suitability are copolymeric polycarboxylates, in particular those of acrylic acid with methacrylic acid and of acrylic acid or methacrylic acid with maleic acid and/or fumaric acid, and in the same range of molecular weight.

It is also possible to use copolymers of at least one monomer from the group consisting of monoethylenically unsaturated C₃-C₁₀-mono- or C₄-C₁₀-dicarboxylic acids or anhydrides thereof, such as maleic acid, maleic anhydride, acrylic acid, methacrylic acid, fumaric acid, itaconic acid and citraconic acid, with at least one hydrophilic or hydrophobic monomer as listed below.

Suitable hydrophobic monomers are, for example, isobutene, diisobutene, butene, pentene, hexene and styrene, olefins with 10 or more carbon atoms or mixtures thereof, such as, for example, 1-decene, 1-dodecene, 1-tetradecene, 1-hexadecene, 1-octadecene, 1-eicosene, 1-docosene, 1-tetracosene and 1-hexacosene, C₂₂-α-olefin, a mixture of C₂₀-C₂₄-α-olefins and polyisobutene having on average 12 to 100 carbon atoms per molecule.

Suitable hydrophilic monomers are monomers with sulfonate or phosphonate groups, and also nonionic monomers with hydroxyl function or alkylene oxide groups. By way of example, mention may be made of: allyl alcohol, isoprenol, methoxypolyethylene glycol (meth)acrylate, methoxypolypropylene glycol (meth)acrylate, methoxypolybutylene glycol (meth)acrylate, methoxypoly(propylene oxide-co-ethylene oxide) (meth)acrylate, ethoxypolyethylene glycol (meth)acrylate, ethoxypolypropylene glycol (meth)acrylate, ethoxypolybutylene glycol (meth)acrylate and ethoxypoly(propylene oxide-co-ethylene oxide) (meth)acrylate. Polyalkylene glycols here may comprise 3 to 50, in particular 5 to 40 and especially 10 to 30 alkylene oxide units per molecule.

Particularly preferred sulfonic-acid-group-containing monomers here are 1-acrylamido-1-propanesulfonic acid, 2-acrylamido-2-propanesulfonic acid, 2-acrylamido-2-methylpropanesulfonic acid, 2-methacrylamido-2-methylpropanesulfonic acid, 3-methacrylamido-2-hydroxypropanesulfonic acid, allylsulfonic acid, methallylsulfonic acid, allyloxybenzenesulfonic acid, methallyloxybenzenesulfonic acid, 2-hydroxy-3-(2-propenyloxy)propanesulfonic acid, 2-methyl-2-propene-1-sulfonic acid, styrenesulfonic acid, vinylsulfonic acid, 3-sulfopropyl acrylate, 2-sulfoethyl methacrylate, 3-sulfopropyl methacrylate, sulfomethacrylamide, sulfomethylmethacrylamide, and salts of said acids, such as sodium, potassium or ammonium salts thereof.

Particularly preferred phosphonate-group-containing monomers are vinylphosphonic acid and its salts.

A further example of builders is carboxymethyl inulin.

Moreover, amphoteric polymers can also be used as builders.

Inventive cleaning agents may comprise, for example, in the range from in total 10 to 70% by weight, preferably from in total 10 to 50% by weight, more preferably up to 20% by weight, of builder.

In one embodiment of the present invention, inventive cleaning agents according to the invention may comprise one or more co-builders.

Inventive cleaning agents may comprise one or more antifoams, selected for example from silicone oils and paraffin oils.

In one embodiment of the present invention, inventive cleaning agents comprise in total in the range from 0.05 to 0.5% by weight of antifoam.

Inventive cleaning agents may comprise one or more enzymes. Examples of enzymes are lipases, hydrolases, amylases, proteases, cellulases, esterases, pectinases, lactases and peroxidases.

In one embodiment of the present invention, inventive cleaning agents may comprise, for example, up to 5% by weight of enzyme, preference being given to 0.1 to 3% by weight. Said enzyme may be stabilized, for example with the sodium salt of at least one C₁-C₃-carboxylic acid or C₄-C₁₀-dicarboxylic acid. Preferred are formates, acetates, adipates, and succinates.

In one embodiment of the present invention, inventive cleaning agents may comprise at least one zinc salt. Zinc salts can be selected from water-soluble and water-insoluble zinc salts. In this connection, within the context of the present invention, water-insoluble is used to refer to those zinc salts which, in distilled water at 25°C, have a solubility of 0.1 g/l or less. Zinc salts which have a higher solubility in water are accordingly referred to within the context of the present invention as water-soluble zinc salts.

In one embodiment of the present invention, zinc salt is selected from zinc benzoate, zinc gluconate, zinc lactate, zinc formate, ZnCl₂, ZnSO₄, zinc acetate, zinc citrate, Zn(NO₃)₂, Zn(CH₃SO₃)₂ and zinc gallate, preferably ZnCl₂, ZnSO₄, zinc acetate, zinc citrate, Zn(NO₃)₂, Zn(CH₃SO₃)₂ and zinc gallate.

In another embodiment of the present invention, zinc salt is selected from ZnO, ZnO.aq, Zn(OH)₂ and ZnCO₃. Preference is given to ZnO aq.

In one embodiment of the present invention, zinc salt is selected from zinc oxides with an average particle diameter (weight-average) in the range from 10 nm to 100 µm.

The cation in zinc salt can be present in complexed form, for example complexed with ammonia ligands or water ligands, and in particular be present in hydrated form. To simplify the notation, within the context of the present invention, ligands are generally omitted if they are water ligands.

Depending on how the pH value of mixture according to the invention is adjusted, zinc salt can change. Thus, it is for example possible to use zinc acetate or ZnCl₂ for preparing formulation according to the invention, but this converts at a pH of 8 or 9 in an aqueous environment to ZnO, Zn(OH)₂ or ZnO aq, which can be present in non-complexed or in complexed form.

Zinc salt may be present in those inventive cleaning agents that are solid at room temperature. In such inventive cleaning agents zinc salts are preferably present in the form of particles which have for example an average diameter (number-average) in the range from 10 nm to 100 µm, preferably 100 nm to 5 µm, determined for example by X-ray scattering.

Zinc salt may be present in those inventive cleaning agents that are liquid at room temperature. In such inventive cleaning agents zinc salts are preferably present in dissolved or in solid or in colloidal form.

In one embodiment of the present invention, inventive cleaning agents comprise in total in the range from 0.05 to 0.4% by weight of zinc salt, based in each case on the dry content of the cleaning agent in question.

Here, the fraction of zinc salt is given as zinc or zinc ions. From this, it is possible to calculate the counterion fraction.

In one embodiment of the present invention, inventive cleaning agents are free from heavy metals apart from zinc compounds. Within the context of the present, this may be understood as meaning that inventive cleaning agents are free from those heavy metal compounds which do not act as bleach catalysts, in particular of compounds of iron and of bismuth. Within the context of the present invention, "free from" in connection with heavy metal compounds is to be understood as meaning that the content of heavy metal compounds which do not act as bleach catalysts is in sum in the range from 0 to 100 ppm, determined by the leach method and based on the dry content. Preferably, inventive cleaning agents has, apart from zinc, a heavy metal content below 0.05 ppm, based on the dry content of the formulation in question. The fraction of zinc is thus not included.

Within the context of the present invention, "heavy metals" are deemed to be all metals with a specific density of at least 6 g/cm³ with the exception of zinc. In particular, the heavy metals are metals such as bismuth, iron, copper, lead, tin, nickel, cadmium and chromium.

Preferably, inventive cleaning agents comprise no measurable fractions of bismuth compounds, for example less than 1 ppm.

Inventive cleaning agents are excellent for cleaning hard surfaces and fibres. For example, they may be used in dishwashing applications, preferably automatic dishwashing applications.

In one embodiment of the present invention, inventive cleaning agents comprise one or more further ingredient such as fragrances, dyestuffs, organic solvents, buffers, disintegrants for tablets ("tabs"), and/or acids such as methylsulfonic acid.

From inventive solid compositions, e. g. granules or powders, examplary detergent compositions for automatic dishwashing detergents can be formulated by mixing the respective components according to the following Table F.

**Table F: Example detergent compositions for automatic dishwashing**

| All amounts in g/sample | ADW.1 | ADW.2 | ADW.3 |
|---|---|---|---|
| Inventive granule (solid alkali metal salt) | 30 | 22.5 | 15 |
| Protease | 2.5 | 2.5 | 2.5 |
| Amylase | 1 | 1 | 1 |
| n-C₁₈H₃₇-O(CH₂CH₂O)₉H | 5 | 5 | 5 |
| Sodium percarbonate | 10.5 | 10.5 | 10.5 |
| TAED | 4 | 4 | 4 |
| Na₂CO₃ | 19.5 | 19.5 | 19.5 |
| Sodium citrate dihydrate | 15 | 22.5 | 30 |
| HEDP | 0.5 | 0.5 | 0.5 |
| ethoxylated polyethylenimine, 20 EO/NH group, Mₙ: 30,000 g/mol | optionally: 0.1 | optionally: 0.1 | optionally: 0.1 |

Laundry detergents according to the invention are useful for laundering any type of laundry, and any type of fibres. Fibres can be of natural or synthetic origin, or they can be mixtures of natural of natural and synthetic fibres. Examples of fibers of natural origin are cotton and wool. Examples for fibers of synthetic origin are polyurethane fibers such as Spandex^{®} or Lycra^{®}, polyester fibers, or polyamide fibers. Fibers may be single fibers or parts of textiles such as knitwear, wovens, or nonwovens.

Another aspect of the present invention is a process for making tablets for automatic dishwashing from an inventive solid alkali metal salt (A) of an aminocarboxylate complexing agent, e. g. a powder or granule, wherein said granule or powder is selected from inventive granules and inventive powders, respectively. Said process is hereinafter also referred to as pelletizing process according to the invention.

Inventive tablets are preferably made with the help of a machine, for example a tablet press.

The pelletizing process according to the invention can be carried out by mixing an inventive solid alkali metal salt (A) of an aminocarboxylate complexing agent, e. g. powder, with at least one non-ionic surfactant and optionally one or more further substance and then compressing the mixture to give tablets. Examples of suitable non-ionic surfactants and further substances such as builders, enzymes are listed above. Particularly preferred examples of non-ionic surfactants are hydroxy mixed ethers, for example hydroxy mixed ethers of the general formula (V).

## Claims

1. Process for making a powder (P) or granule (G) which is performed in a multizone or multinozzle drying apparatus (A) comprising 2 to n zones (Z) and/or 2 to i nozzles (N), comprising
(i) Spraying in a first zone (Z1) and/or nozzle (N1) a solution or slurry of a single compound or a mixture of compounds, and
(ii) Spraying in each of the following zones (Zn) and/or nozzles (Ni), the same or different solution or slurry of a single compound or a mixture of compounds,
wherein in at least one zone (Zx) or nozzle (Ny) the solution or slurry of a single compound or a mixture of compounds is different from the solution or slurry of a single compound or a mixture of compounds of the first zone (Z1) and/or nozzle (N1).

2. Process for making a powder (P) or granule (G) according to claim 1, wherein the solution or slurry is aqueous.

3. Process for making a powder (P) or granule (G) according to claim 1 or 2, wherein the process is continuous.

4. Process according to any one of the preceding claims, wherein the process is performed in a multizone or multichamber fluidized bed spray granulation apparatus.

5. Process according to any one of the preceding claims, wherein spraying is done through separate spraying nozzles (N) of the spray granulation or spray drying apparatus.

6. Process according to any one of the preceding claims, wherein spraying is done in separate spraying chambers of the spray granulation or spray drying apparatus.

7. Process according to any one of the preceding claims, wherein the nozzles (N) have a distance of at least 10 cm, preferably at least 30 cm from each other.

8. Process for making a powder (P) or granule (G) according to any one of the preceding claims, to produce a powder (P) or granule (G) containing a mixture of typical ingredients of washing or cleaning formulations.

9. Process for making a powder (P) or granule (G) according to claim 8, wherein typical ingredients of washing or cleaning formulations are selected from the list consisting of builders, surfactants, polymers, enzymes and inorganic compounds.

10. Process for making a powder (P) or granule (G) according to claim 8, wherein typical ingredients of washing or cleaning formulations are selected from the list consisting of anionic surfactants, cationic surfactants and non-ionic surfactants.

11. Process for making a powder (P) or granule (G) according to claim 8, wherein typical ingredients of washing or cleaning formulations are selected from polymers, preferably from the list consisting of homo- and copolymers of (meth)acrylic acid, polyaspartic acid and polyepoxysuccinic acid.

12. Process for making a powder (P) or granule (G) according to any one of the preceding claims, wherein typical ingredients of washing or cleaning formulations are selected from the list consisting of (i) chelating agents, preferably selected from methyl glycine diacetic acid (MGDA), glutamic acid diacetate (GLDA), iminodisuccinic acid (IDS), ethylediamine disuccinic acid (EDDS), citrate, phosphonates, their respective alkali metal salts and their mixtures, (ii) polymers, (iii) surfactants, (iv) enzymes and (v) inorganic compounds.

13. Process for making a powder (P) or granule (G) according to any one of the preceding claims, wherein the mixture of compounds (M) contains at least one compound (C) selected from the list consisting of (i) chelating agents, preferably selected from methyl glycine diacetic acid (MGDA), glutamic acid diacetate (GLDA), iminodisuccinic acid (IDS), ethylediamine disuccinic acid (EDDS), citrate, phosphonates, their respective alkali metal salts and their mixtures, (ii) polymers, (iii) surfactants, (iv) enzymes and (v) inorganic compounds.

14. Process for making a powder (P) or granule (G) according to any one of the preceding claims, wherein the compound (C) is selected from methyl glycine diacetic acid (MGDA) and its respective alkali metal salts, preferably sodium salts.

15. Powder (P) or granule (G), obtained or obtainable according to the process of any one of claims 1 to 14, preferably having a residual moisture content in the range of from 1 to 30 % by weight, preferably 5 to 25 % by weight, relative to the total weight of the powder (P) or granule (G).

16. Use of a powder (P) or granule (G), obtained or obtainable according to the process of any one of claims 1 to 14, in laundry or dishwashing applications, preferably dishwashing applications, more preferably, automatic dishwashing applications, or in industrial and institutional cleaning applications.
